(19) Europäisches Patentamt
European Patent Office
Office européen des brevets

(11) Publication number: **0 182 580**
**A2**

(12) # EUROPEAN PATENT APPLICATION

(21) Application number: **85308209.7**

(22) Date of filing: **12.11.85**

(51) Int. Cl.⁴: **C 08 L 73/00**, C 08 K 3/34, F 16 C 33/12

(30) Priority: **23.11.84 GB 8429608**

(43) Date of publication of application: **28.05.86 Bulletin 86/22**

(84) Designated Contracting States: **AT BE CH DE FR GB IT LI LU NL SE**

(71) Applicant: **IMPERIAL CHEMICAL INDUSTRIES PLC, Imperial Chemical House Millbank, London SW1P 3JF (GB)**

(72) Inventor: **Cox, Michael Kenneth, 3 Rivermead Avenue Riversgarth Estate, Darlington County Durham (GB)**

(74) Representative: **James, David Gomer et al, Imperial Chemical Industries PLC Legal Department: Patents Po Box 6 Bessemer Road, Welwyn Garden City Herts, AL7 1HD (GB)**

(54) **Aromatic polymer composition.**

(57) An aromatic polymer composition comprises a polyaryletherketone and talc. The polyarylethetherketone can be polyaryletheretherketone. The composition can be obtained by blending together the aromatic polymer and the talc. The blend can be used for the production of bearings or bearing liners.

EP 0 182 580 A2

## Aromatic Polymer Composition

The present invention relates to polymer compositions based on aromatic polymers, and the production and use of such compositions.

Polymeric materials are now extensively used for many purposes and in recent years polymers have become available which have high melting or softening points which make them suitable for use at higher temperatures than are attainable using the longer established polymeric materials. Aromatic polymers, for example the polyaryletherketones, are examples of such polymers which, in addition to having high service temperatures have other desirable properties such as electrical insulation characteristics. Polyaryletherketones have good electrical insulating properties and high melting or softening temperatures and some polymers of this type can be used as an electrical insulator continuously at temperatures in excess of 200°C, for example up to about 250°C. However it will be appreciated that the period of use at elevated temperature is dependent on the temperature and decreases as the temperature is increased.

Polyetherketones also have properties which have resulted in proposals to use the polymer in bearing applications. However a lower coefficient of friction and an increased resistance to wear are desirable for such applications.

According to the present invention there is provided a polymer composition which comprises a mixture of a polyaryletherketone with talc.

The composition may include other components which are suitable for incorporation into a polyaryletherketone. Such other components include, for example, inorganic and organic fibrous fillers such as glass fibre, carbon fibre, and poly-paraphenylene terephthalamide fibre; organic and inorganic fillers such as polytetrafluoroethylene, graphite, mica and vermiculite; and stabilisers such as phosphates.

It is preferred that the total proportion of additives (including talc) is at least 1%, and does not exceed 70%, by weight of the composition and especially does not exceed 50% by weight of the composition. The composition preferably contains from 5 up to
of the composition. The composition preferably contains from 5 up to

30% by weight of talc relative to the total weight of the composition. Compositions in accordance with the present invention include compositions consisting essentially of 70 to 95% by weight of the polyaryletherkeone and correspondingly 30 to 5% by weight of talc.

The polyaryletherketone may be a polymer which contains the repeat units

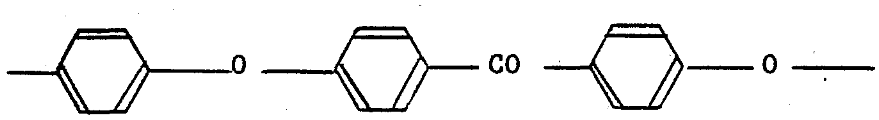 I

or the repeat units

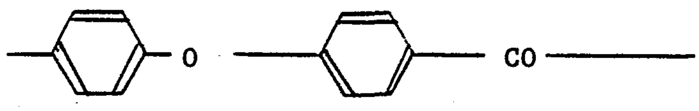 II

alone or in conjunction with each other and/or in conjunction with other repeat units.

The other repeat units which may be present in the the polyaryletherketone are typically of the general formula

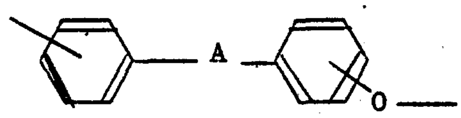 III

wherein

A is a direct link, a sulphur atom, a divalent hydrocarbon radical or a group

$$-Q-(Ar-Q^1\rangle_n-$$

in which

Q is $-CO-$, $-SO_2-$ or $-O-$;

$Q^1$ is $-CO-$, $-SO_2-$ or $-O-$;

Ar is a divalent aromatic radical; and

n is 0, 1, 2 or 3.

In the formula III, if the group A is a divalent hydrocarbon radical it is typically a phenylene group or a dimethylmethylene group ($-C(CH_3)_2$). The aromatic radical Ar is preferably a divalent aromatic radical selected from phenylene, biphenylylene or terphenylylene. In the formula III, if the group A is $-Q(Ar-Q^1\rangle_n$, it is preferred that the groups Q are such that, in the polyaryletherketone, the groups $-SO_2-$ amount to no more than 25% of

the total of the groups -CO- and $-SO_2-$.

We prefer that the polyaryletherketone is a crystalline polymer containing the repeat units I. Especially preferred are such polymers which are tough and have an inherent viscosity of at least 0.7, as is described in more detail in our European Patent Publication No 001 879. Inherent viscosity is measured at 25°C on a solution of the polymer in concentrated sulphuric acid of density 1.84g $cm^{-3}$, said solution containing 0.1g of polymer per $100cm^3$ of solution. As an alternative to inherent viscosity, an indication of the average molecular weight of the polymer may be obtained by measuring the melt viscosity of the polymer. Preferred polymers have a melt viscosity of at least 0.1 $KNs/m^2$, which corresponds approximately to an inherent viscosity of 0.7. The melt viscosity is measured using a ram extruder fitted with a 3.175x0.5mm die and operating at 400°C and a shear rate of $1000s^{-1}$.

The talc preferably has a number average particle size of not more than 30 micrometres and especially not more than 20 micrometres. Preferably at least 90% of the talc particles (by number) have a particle size of less than 30 micrometres.

The polymer composition may be made by admixture of the two components plus any additional optional components in a suitable mixing machine to effect particle or melt blending. More specifically the polyaryletherketone and talc, in the form of dry powders, can be mixed together using a suitable powder blending technique such as tumble blending or a high speed mixer. The blend thus obtained may be extruded into a lace which is chopped to give granules. The granules can be used to produce shaped articles by the use of a suitable forming operation, for example injection moulding or extrusion, to give a shaped article.

Compared to the polymer alone, or a blend of the polymer and the same proportion by weight of poly-tetrafluorethylene, the compositions of the present invention have been found to have a lower coefficient of friction and a higher limiting PV value (as defined in Notes to Table One) at high speeds and/or at elevated temperature. Such a combination of properties makes the composition suitable for use in bearing applications. Thus, the polymer compositions may be

used as a bearing or as a bearing liner.

Thus, as a further aspect of the present invention there is provided a plain bearing formed of a polymer composition as herein described or comprising a metal backing having a lining formed of a polymer composition as herein described.

If the composition is used to form a plain bearing this may be done by injection moulding the composition into the bearing. Alternatively, the composition may be extruded into the form of a rod, the centre of which is machined out to form the bearing.

The composition may also be used as a bearing liner on a metal backing. The metal backing may be any suitable metal such as, for example, aluminium alloy or steel with a suitable surface layer to assist in bonding the lining to the backing. The lining may be a thick coating of 0.75 to 35mm in thickness but may be an overlay, for example of 10 to 30 micrometres, applied to a metal bearing lining. The polymer composition is preferably applied to the metal backing as a sheet. The polymer composition may be extruded to form a sheet and the sheet issuing from the extruder then bonded to the metal backing as a second stage of a single operation. Alternatively, a preformed sheet of the polymer composition is presssure bonded or roll-bonded to a heated metal backing. The temperature of bonding the polymer composition to the metal backing is preferably sufficiently high that the composition can flow under the conditions of bonding to the backing and typically the temperature is at least 350°C. The coated backing is preferably allowed to cool slowly from the temperature of bonding to ambient temperature to permit the polyaryletherketone component of the polymeric composition to attain a high crystallinity, for example at least 30%.

The composition of the present invention is more isotropic than a fibre reinforced material and this facilitates bearing design when using such compositions.

The polymer composition may be used as an insulating layer for an electrical conductor or as a sheath for one or more insulated conductors. If desired, the polymer composition can be used both as the insulating layer and the outer sheath.

The formation of an insulating layer or an outer sheath can

be effected using standard wire coating conditions, with the exception that the extruder is operated at a higher temperature than is usual with most plastics materials, for example at a barrel temperature of at least 340°C, and preferably with a die temperature of at least 375°C, which may be in excess of 400°C.

The polymer composition also has improved burning characteristics compared to the polymer alone. More specifically, the polymer composition has a higher oxygen index compared to the polymer alone.

The present invention is illustrated by the following examples and test results.

Example 1

Talc (obtained from MacFarlane and Robson Limited, Hedgefield House, Blaydon-on-Tyne, Tyne and Wear, Great Britain and having a number average particle size of 3.7 micrometres) and polyetheretherketone ('Victrex' (Registered Trade Mark) PEEK aromatic polymer 450 P grade, obtainable from Imperial Chemical Industries PLC) were dry mixed by tumble blending for 15 minutes in the proportions of 15% by weight of talc and 85% by weight of polyetheretherketone.

The blend was then formed into granules by extrusion into a lace which was cooled by passing into a water bath and the lace was then cut to form granules. The extrusion was effected using a single screw Plaston extruder having a 3.8cm diameter screw with a length to diameter ratio of 24 : 1 and having the following temperature profile from the hopper end to the die 345°C, 360°C, 365°C, 370°C and 380°C. The die was of 5 mm diameter and the extruder was operated at a rate of about 5kg/hour.

Injection moulded discs 11.4 cm diameter and 3.2 mm thick were obtained from the granules using an Arburg Allrounder 220/90-350 injection moulding machine which was operated at 380°C with a mould at about 150°C and ejecting the moulded discs into the air. Tensile bars 178 mm long, 19 mm (at both ends), narrowing to 13 mm, wide and 3 mm thick were also obtained by injection moulding, using the same moulding conditions as for the discs.

Test specimens of about 10mm x 10mm x 3.0($\pm$ 0.5)mm in size, cut from the injection moulded discs, were subjected to tribological

testing. The test results are set out in Tables One to Four.

Example 2

The procedure of Example 1 was repeated using talc (obtained from Baker Sullivan, 253 Cranbrook Road, Ilford, Essex IG1 4TQ, grade HAICHEN 325) having a number average particle size of approximately 15 micrometres.

Injection moulded discs, and tensile bars, both as described in Example 1, were obtained from the composition formed using the injection moulding conditions of Example 1.

Test specimens, as in Example 1, were subjected to tribological testing. The test results are set out in Tables One to Four.

TABLE ONE

| Sample (a) | Load (kg) (b)(c) | LPV (b)(d)(e) | CF (b)(f) | Wear Rate (b) (h) | (i) |
|---|---|---|---|---|---|
| PEEK | 8 | 1500 | 0.51 | 150 | 300 |
| PEEK + PTFE | 12 | 2270 | 0.27 | NM | 180 |
| Eg 1 | 40 | > 9770* | 0.08 | 85 | 70 |
| Eg 2 | 40 | >8740* | 0.06 | 50 | 88 |

Notes to Table One

(a) PEEK is polyetherketone ('Victrex' (Registered Trade Mark), PEEK aromatic polymer, 450 G grade, obtainable from Imperial Chemical Industries PLC).

PEEK + PTFE is a composition of polyetheretherketone ('Victrex' PEEK aromatic polymer, 450 G grade) and polytetrafluoroethylene ('Fluon' (Registered Trade Mark) L169 lubricant grade polytetrafluoroethylene powder) containing 15% by weight of polytetrafluoroethylene and obtained by a method as described for the production of PEEK + talc in Example 1.

Eg 1 is the blend of PEEK + talc obtained as described in Example 1.

Eg 2 is the blend of PEEK + talc obtained as described in Example 2.

(b) Tribological data was obtained using an Amsler Wear Test Machine operating in a pad on ring configuration. The pads were the test specimens of 10mmx10mmx3.0($\pm$0.5)mm described previously. The ring was 60mm in diameter and 6mm wide and was formed of EN8 steel ground to a surface finish of 0.3 to 0.4 micrometers Ra. The ring was rotated to give a surface speed of 600 feet/minute (182.9 metres/minute). The test specimen was "run in" for 10 minutes under a 3 kg load and for a further 10 minutes under a 5 kg load. The load was then increased in increments of about 5 kg and each load was maintained for 0.5 hour. The load was increased up to a maximum of 40 kg or until one of the failure criteria was exceeded. The failure criteria are catastrophic (that is rapid) increase in wear, friction or temperature. Tests were carried out at 200°C.

(c) Maximum test load reached before failure.

(d) Limiting value of PV (Pressure X Velocity) is calculated by dividing load (in kg) by actual area of contact (wear scar area in $cm^2$) and multiplying result by surface speed (in m/minute).

(e) * indicates that the sample did not fail. The maximum load was maintained for 200 minutes without failure.

(f) CF is the coefficient of friction and is the average of the coefficient of friction at the load giving the limiting value of PV and the coefficient of friction at half the load which gives the limiting value of PV. The coefficient of friction was measured continuously.

(h) Wear rate up to half the load which gives the limiting value of PV.

(i) Wear rate up to the load which gives the limiting value of PV.

NM means not measured.

The tribological tests described under note (b) of Table One were repeated under different conditions and are reported in Table Two.

Table Two

| Sample (a) | Load (kg) (j) (c) | LPV (j)(d)(e) | CF (j)(f) | Wear Rate (j) (h) | (i) |
|---|---|---|---|---|---|
| PEEK | 8 | 1479 | 0.58 | 450 | NM |
| PEEK + PTFE | 20 | 3641 | 0.28 | 600 | 138 |
| Eg 1 | 40 | >8250* | 0.08 | 270 | 150 |
| Eg 2 | 40 | 7822 | 0.09 | 150 | 237 |

Notes to Table Two

(a), (c), (d), (e), (f), (h), and (i) are all as defined in Notes to Table One.

(j) Tribological data was obtained as in Note (b) to Table One but at a temperature of 20°C.

The tribological tests described under note (b) of Table One were repeated under different conditions and the result are reported in Table Three.

Table Three

| Sample (a) | Load (kg) (k)(c) | LPV (k)(d) | CF (k)(f) | Wear Rate (k) (h) | (i) |
|---|---|---|---|---|---|
| PEEK | 70 | 4008 | 0.15 | 350 | 300 |
| PEEK + PTFE | 150 | 7027 | 0.11 | 250 | 458 |
| Eg 1 | 210 | 9964 | 0.05 | 440 | 375 |
| Eg 2 | 210 | 11137 | 0.05 | 107 | 214 |

Notes to Table Three

(a), (c), (d), (f), (h) and (i) are all as defined in Notes to Table One.

(k) Tribological data was obtained using a procedure generally as described in Note (b) to Table One but with the following variations.

The ring was rotated to give a surface speed of 100 feet/minute (30.5 metres/minute). The test speciment was "run in" for 10 minutes under a 10 kg load and for a further 10 minutes under a 30 kg load. The load was then increased in increments of 20 kg up to 90 kg and thereafter in increments of 30 kg, and each load was maintained for 0.5 hour. The load was increased up to a maximum of 210 kg or until one of the failure criteria was exceeded.

The tribological tests described under note (k) of Table Three were repeated at 20°C and the results are reported in Table Four.

## Table Four

| Sample (a) | Load (kg) (1)(c) | LPV (1)(d) | CF (1)(f) | Wear Rate (1) (h) | Wear Rate (1) (i) |
|---|---|---|---|---|---|
| PEEK | 70 | 3641 | 0.34 | 303 | 432 |
| PEEK + PTFE | 140 | 7108 | 0.12 | 250 | 375 |
| Eg 1 | 80 | 3080 | 0.22 | 750 | 875 |
| Eg 2 | 110 | 4559 | 0.18 | 300 | 675 |

Notes to Table Four

(a), (c), (d), (f), (h), and (i) are all as defined in Notes to Table One.

(1) Tribological data was obtained as in Note (k) to Table Three but at a temperature of 20°C.

Injection moulded samples of the composition were subjected to limiting oxygen index, smoke density, toxic gas emission and flammability tests. The results are set out in Tables Five to Seven. For all these tests, test specimens were cut from the discs 11.4 cm diameter and 3.2 mm thick prepared as described in Examples 1 and 2.

TABLE TWO

| Sample (a) | Limiting Oxygen Index (m) |
|---|---|
| PEEK | 35 |
| Eg 1 | 45 |

Notes to Table Five

(a) is as defined in Notes to Table One.

(m) Limiting oxygen index is measured according to ASTM Test Method D2863-77 and is the minimum concentration of oxygen which will just support combustion of a test specimen of dimensions 6.5 ($\pm$0.5) mm x 3.0($\pm$0.5) mm x 70-150mm cut from the injection moulded discs. The specimen is ignited using a hydrogen or propane flame and must burn for at least three minutes or for a length of at least 50mm.

TABLE SIX

| Sample | Smoke test (n) | | | | Gas analysis (o) | | | |
|---|---|---|---|---|---|---|---|---|
| | Minimum trans % | Time to minimum trans (min) | $D_m$ | Weight loss % | CO (ppm) | $CO_2$ (%) | $SO_2$ (ppm) | HCN (ppm) |
| PEEK | 91 | 20 | 5 | 1.5 | 240 | 0 | ND | ND |
| Eg 1 | 95 | 20 | 3 | 1.2 | 70 | 0.2 | ND | ND |

Notes to Table Six

(a) is as defined in Notes to Table One.

(n) Smoke density test was carried out in a NBS smoke chamber using the procedure of ASTM Test Method E662-79. The test specimens were 76 x 76mm x 3.0 ($\pm$0.5)mm, (cut from the injection moulded discs) and were mounted in a holder to expose an area about 65 x

65mm. The test was carried out in the flaming mode and the smoke density was determined by passing a collimated light beam (from an incandescent light source) vertically through the smoke chamber to a photodetector.

$D_m$ is the Maximum specific optical density.

(o) After exposure of the sample in the smoke chamber for 20 minutes, gas samples were taken using Drager tubes and the samples were analysed.

ND indicates "none detected".

TABLE SEVEN

| Sample (a) | Burning test (p) Classification |
|---|---|
| PEEK | 94V-0 |
| Eg 1 | 94V-0 |
| Eg 2 | 94V-0 |

Notes to Table Seven

(a) is as defined in Notes to Table One.

(p) Flammability was tested using the Underwriter's Laboratories UL94 vertical test. The test specimens were about 110x12.7mm area and cut from the injection moulded discs. Each specimen was clamped in a draught free cabinet and ignited by applying a blue bunsen burner flame for 10 seconds.

Injection moulded tensile bars, obtained as described in Examples 1 and 2, were subjected to mechanical testing. The test results are set out in Table Eight.

Table Eight

| Sample (a) | Tensile Strength to Yield at 23°C (MPa) (q) | Elongation to Break at 23°C (%) (q) | Flexural Strength (MPa) (r) 23°C | Flexural Strength (MPa) (r) 250°C | Flexural Modules (GPa) (r) 23°C | Flexural Modules (GPa) (r) 250°C | Notched Izod Impact Strength at 23°C (J/m) (s) |
|---|---|---|---|---|---|---|---|
| PEEK | 96 | 15 | 153 | 9 | 4 | 0.3 | 83 |
| Eg 1 | 91 | 11 | 161 | 8 | 5 | 0.2 | NM |
| Eg 2 | NM | NM | NM | NM | 5 | NM | 111 |

Notes to Table Eight

(a) is as defined in Notes to Table One.

(q) Measured used the procedure of ASTM Test Method D368 using the following conditions:-

| | |
|---|---|
| cross head speed | 10mm/minute |
| chart speed | 50mm/minute |
| gauge length | 115mm |

(r) Measured using the procedure of ASTM Test Method D790 using the following conditions:-

| | |
|---|---|
| cross head speed | 5mm/minute |
| chart speed | 50mm/minute |
| span | 50mm |

(s) Measured using the procedure of ASTM Test Method D256 using an Izod bar measuring 72mm x 13mm x 3mm and having a 0.25mm radius moulded in notch

NM means not measured.

Test specimens of 3mm x 3mm x 3mm in size were cut from the injection moulded discs and were subject to determination of the coefficient of thermal expansion. The test results are set out in Table Nine.

Table Nine

| Sample (a) | Temperature (°C) | Coefficient of Thermal Expansion ($°K^{-1} \times 10^5$) (t) | | |
|---|---|---|---|---|
| | | x | y | z |
| PEEK | 50 | 4.9 | 5.5 | 6.3 |
| | 140 | 5.3 | 6.1 | 6.3 |
| | 250 | 9.4 | 9.3 | 9.6 |
| Eg 2 | 50 | 3.5 | 5.0 | 5.6 |
| | 140 | 3.2 | 5.4 | 6.0 |
| | 250 | 6.1 | 7.9 | 9.9 |

Notes to Table Nine

(a) is as defined in Notes to Table One.

(t) Coefficient of Thermal Expansion was determined using test speciments 3mm x 3mm x 3mm cut from a single edge gated moulded disc and using a Perkin Elmer TMS 1 thermomechanical analyser operating at a heating rate of 5°C/minute. The test specimens were annealed for one hour at 260°C prior to use.

x refers to measurement in the direction of flow of the melt into the moulding.

y refers to measurement in the direction tranverse to the flow of the melt into the moulding.

z refers to measurement through the thickness of the moulding.

Claims

1. A polymer composition comprising a mixture of a polyaryletherketone with talc.

2. A composition as claimed in claim 1 which also includes at least one further component which is a stabiliser, an inorganic or organic fibre or an inorganic or organic filler.

3. A composition as claimed in either claim 1 or claim 2 wherein the proportion of talc plus any further components is at least 1%, and does not exceed 70%, by weight of the composition.

4. A composition as claimed in any one of claims 1 to 3 which contains from 5 up to 30% by weight of talc relative to the total weight of the composition.

5. A composition as claimed in claim 1 which consists essentially of a polyaryletherketone and talc.

6. A composition as claimed in any one of claims 1 to 5 whereof the polyaryletherketone component is a polymer which contains the repeat units

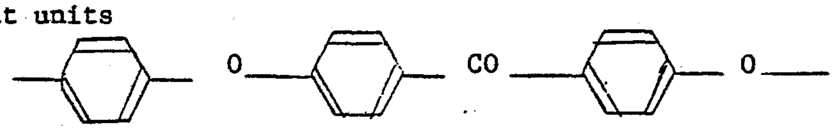

I .

or the repeat units

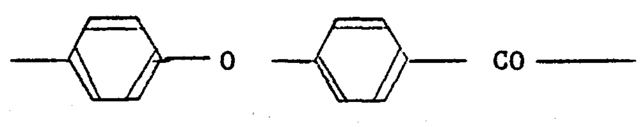

II

alone or in conjunction with each other and/or in conjunction with other repeat units.

7. A composition as claimed in any one of claims 1 to 6 wherein the talc has a number average particle size of not more than 30 micrometres.

8. A process for the production of a polymer composition which comprises mixing a polyaryletherketone with talc.

9. A process as claimed in claim 8 wherein the materials are mixed together using a powder blending technique and the powder blend is extruded.

10. A plain bearing formed from a polymer composition, or comprising a metal backing having a lining formed from a polymer composition, wherein the polymer composition is as claimed in any one of claims 1 to 7.